# EUROPÄISCHE PATENTANMELDUNG

(11) **EP 3 208 212 A1**
(43) Veröffentlichungstag der Anmeldung: **23.08.2017**
(21) Anmeldenummer: 17156569.0
(22) Anmeldetag: 16.02.2017
(51) Int. Cl.: B65G 1/08, B65G 1/137

(54) **REGAL EINES WARENWIRTSCHAFTSSYSTEMS ZUR BEREITSSTELLUNG VON PRODUKTEN**

(30) Priorität: 19.02.2016 DE 202016100875 U
(71) Anmelder: Würth Industrie Service GmbH & Co. KG, 97980 Bad Mergentheim (DE)
(72) Erfinder: Reuther, Dietmar, 74595 Langenburg (DE)
(74) Vertreter: Dilg, Haeusler, Schindelmann Patentanwaltsgesellschaft mbH

(57) **Zusammenfassung**

Regal eines Warenwirtschaftssystems zur Bereitstellung von Produkten (3) mit
a. zwei Seitenelementen,
b. mindestens einem vorderen und einem hinteren Horizontalelement,
i. wobei diese die beiden Seitenelemente verbinden,

c. mindestens einem Produktträger (5) zur Aufnahme von gleichen Produkten (3),
i. der in das vordere und das hintere Horizontalelement gesteckt ist und
ii. eine eindeutige Kennzeichnung aufweist,

d. einer Messeinrichtung (5M) für mindestens einen Produktträger (5),
i. die den Füllstand des Produktträgers (5) mit Produkten (3) misst,

e. einem Verbindungsmittel, mit dem Daten der Messeinrichtung (5M) betreffend den Füllstand des Produktträgers (5) mit Produkten (3) und die Kennzeichnung des Produktträgers (5) an eine Zentrale eines Warenwirtschaftssystems übermittelbar sind, um Nachbestellungen von Produkten (3) für einen Produktträger (5) auszulösen.

## Beschreibung

Die Erfindung betrifft ein Regal eines Warenwirtschaftssystems zur Bereitstellung von Produkten.

An ein Warenwirtschaftssystem werden heutzutage hohe Anforderungen gestellt: Zum einen sollen sämtliche Produkte ständig im ausreichenden Maße vorhanden sein und zum anderen soll der Lagerbestand möglichst gering sein, um die Kosten für die Produkte in dem Lager so gering wie möglich zu halten. Moderne Warenwirtschaftssysteme enthalten vor diesem Hintergrund eine Anzahl von Regalen mit Regalfächern, in denen Produkte angeordnet sind. Mittels verschiedener Methoden kann der Bestand an Produkten in den Regalfächern gemessen und an eine Zentrale eines Warenwirtschaftssystems übermittelt werden. Unterschreitet die Anzahl an Produkten eines bestimmten Produkts einen zuvor festgelegten Schwellwert, so "warnt" das Warenwirtschaftssystem einen Hestellverantwortlichen, der daraufhin eine Nachbestellung des Produkts auslöst, s. bspw. DE102013222263 oder EP02390204.

Ein Warenwirtschaftssystem kann dabei eine große Anzahl Waren in den Produkten enthalten, bspw. mehrere zehn- oder hunderttausend verschiedene Waren. Ein Produkt kann eine Kartonage, eine Aerosoldose, ein Kanister, ein Kleinladungsträgcr mit oder ohne Entnahmeklappe oder ein Einlegeelement, bspw. für eine Schublade, sein. In der Kartonage können dabei als Ware Schrauben oder Muttern o.dgl. angeordnet sein. In den Aerosoldosen können als Ware Lacke, Bremsenreiniger oder Reinigungsmittel enthalten sein. In den Kanistern können als Ware Öle, Frostschutzmittel für Fahrzeuge oder Reinigungsmittel enthalten sein. In den Kleinladungsträgern, bspw. gemäß DE102014105871 oder DE 102012017295, können als Ware Kleinteile jeglicher Art aufbewahrt sein, bspw. Schrauben, Dichtungen, Muttern. Ein Einlegeelement für eine Schublade in bspw. einem Werkstattwagen ist typischerweise ein Tiefziehelement, in dem verschiedene Fächer für Waren in Form von Kleinteilen gebildet sind, bspw. für Elektroklemmen, Schrauben, Muttern etc.

In der Regel werden in einem Regalfach mehrere Produkte angeordnet, deren Bestand jeweils mit einer Messeinrichtung erfasst wird. Wird ein Produkt aus dem Sortiment des Warenwirtschaftssystems genommen oder soll der Lagerplatz eines Produktes von einer Stelle an eine andere Stelle geändert werden, sind aufwändige Umbaumaßnahmen erforderlich, da an dem Regal umgebaut werden muss und auch die Software zur Erfassung des Bestands des Produkts inklusive der zugehörigen Messeinrichtung geändert bzw. angepasst werden muss.

Aufgabe der vorliegenden Erfindung ist es daher, ein Regal für ein Warenwirtschaftssystem anzugeben, mit dem auf einfache Weise Änderungen in dem Regal vorgenommen werden können.

Die Aufgabe wird erfindungsgemäß durch ein Regal mit den Merkmalen des Anspruchs 1 und ein Warenwirtschaftssystem mit mindestens einem solchen Regal gelöst.

Regale für Warenwirtschaftssysteme gemäß dem Stand der Technik weisen Regalfächer für Produkte auf, die variable Abmessungen haben. Hier setzt die vorliegende Erfindung an indem sie die mögliche Breite von Produkten auf eine vorbestimmte geringe Anzahl von Breiten reduziert und für jede dieser Breiten einen Produktträger bereitstellt, der eine Aufnahmebreite hat, die einer der möglichen Breiten von Produkten entspricht. Dadurch können alle Produkte und somit alle Waren eines Warenwirtschaftssystems auf einem geeignten Produktträger aus einer begrenzten Anzahl von möglichen Produktträgern angeordnet werden, der dann in dem Regal angeordnet wird, in einem Ausführungsbeispiel vorne und hinten von einem Horizontalelement getragen. Jedem Produktträger ist eine Messeinrichtung zugeordnet, die den Bestand an Produkten auf dem Produktträger erfasst. Mittels einem Verbindungsmittel kann eine Kennzeichnung des Produktträgers und ein Bestand von Produkten auf dem Produktträger an eine Zentrale eines Warenwirtschaftssystems übermittelt werden, um einen Bestellvorgang auszulösen.

Mit anderen Worten ist somit jedes Produkt und somit jede Ware auf einem eigenen "Tablett" in dem Regal angeordnet, das die Anzahl der Produkte auf dem Tablett misst und an eine Zentrale des Warenwirtschaftssystems übermittelt. Die Tabletts (bzw. Produktträger) können in dem Regal auf einfache Weise verschoben bzw. umgeordnet werden, indem sie einfach dem Regal entnommen und an eine andere Stelle in das Regal gesetzt werden. Auf diese Weise ist der Lagerplatz eines Produkts innerhalb des Regals "umgezogen", ohne das weitere Umbauarbeiten vorzunehmen sind.

Ein Seitenelement kann als eine Seitenwand oder durch mindestens zwei Regalstangen gebildet sein, jeweils insbesondere aus Metall.

Das Horizontalelement ist vorteilhaft eine Strebe, insbesondere eine Metallstrebe, die bevorzugt ein Lochraster aufweist.

Bevorzugt ist eine vorbestimmte Anzahl von Produktträgern mit unterschiedlicher Aufhahmebreite dem Regal zugeordnet ist, wobei jedes einer Produkte eines Warensortiments des Warenwirtschaftssystems eine Abmessung aufweist, die einer Aufnahmebreite eines Produklträgers entspricht.

Bevorzugt weist ein Produktträger einen Produktträgerboden, zwei Produktträgerseiten, eine Produktträgervorderseite und eine Produktträgerhinterseite auf sowie vorteilhaft am Produktträgerboden angeordnete, den Produktträgerseiten gegenüberliegende Stecknasen, die in ein Lochraster der Horizontalelemente steckbar sind.

Vorteilhaft umfasst der Produktträger einen insbesondere federbelasteten Produktschieber, der auf dem Produktträger angeordnete gleiche Produkte in Richtung der Produktträgervorderseite drückt.

Dabei ist vorteilhaft eine Aufnahmebreite des Produktträgers durch den Abstand der Produktträgerseiten gebildet ist.

Ein Verhältnis zwischen einer Anzahl von unterschiedlichen Waren des Warenwirtschaftssystems zu einer Anzahl von unterschiedlichen Produktträgern des Regals ist vorteilhaft wie mind. 100:1, bevorzugt mind. wie 1000: 1 und weiter bevorzugt mind. wie 10000: 1.

Ein Produkt kann eine Kartonage, eine Aerosoldose, ein Kanister, ein Kleinladungsträger mit oder ohne Entnahmeklappe oder ein Einlegeelement, bspw. für eine Schublade, sein.

Die Meßeinrichtung kann einen Ultraschallsender und -empfänger oder eine Linearmesseinrichtung umfassen, um eine Länge zwischen der Produktträgervorderseite des Produktträgers und einem Produktschieber zu bestimmen, zwischen denen die gleichen Produkte angeordnet sind, um die Anzahl von Produkten zwischen diesen bzw. auf dem Produktträger zu bestimmen.

Die Kennzeichnung des Produktträgers kann ein Kennzeichnungselement auf dem Produktträger umfassen, bspw. ein Barcode oder ein QR-Code, und/oder ein Kennzeichnungselement in der Messeinrichtung umfassen, bspw. eine MAC-Adresse, ein Barcode oder ein QR-Code.

Das Verbindungsmittel umfasst mit Vorteil einen Datenlogger und ein Übertragungsmittel, bspw. eine drahtgebundene oder drahtlose Verbindungsleitung, zu einem Warenwirtschaftssystem, so dass die Daten der Messeinrichtungen von dem Datenlogger gesammelt und mittels dem Übertragungsmittel an eine Zentrale des Warenwirtschaftssystems übertragbar sind.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: für verschiedene Produkte eines Warenwirtschaftssystems die jeweiligen Abmessungen, in denen es in dem Warenwirtschaftssystem vorliegt,
- Fig. 2: eine Frontansicht von verschieden breiten Produktträgern eines Regals gemäß der vorliegenden Erfindung,
- Fig. 3: eine perspektivische Ansicht eines Produktträgers, auf dem zwei Produkte angeordnet sind, die durch einen Produktschieber an eine Produktträgervorderseite gedrückt werden,
- Fig. 4: eine Frontansicht eines erfindungsgemäßen Regals,
- Fig. 5: eine Seitenansicht des Regals der Figur 4,
- Fig. 6: eine perspektivische Ansicht eines erfindungsgemäßen Regals gemäß einem weiteren Ausführungsbeispiel und
- Fig. 7: eine perspektivische Ansicht eines erfindungsgemäßen Regals gemäß einem weiteren Ausführungsbeispiel.

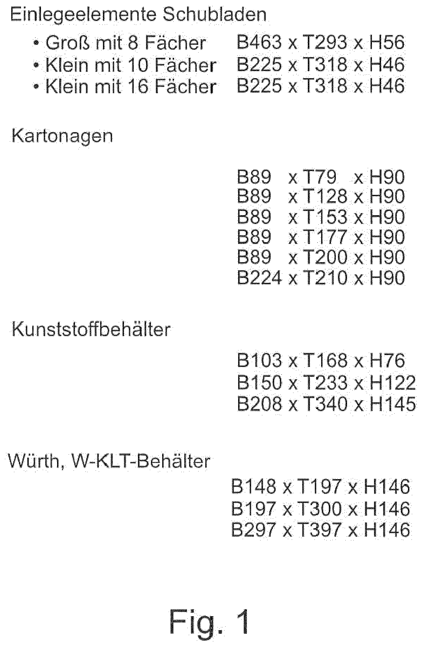

Figur 1 zeigt verschiedene Produkte eines Warenwirtchaftssystems: Als erstens sind Einlegeelemente für Schubladen aufgeführt, die als tiefgezogene Kunststoffeinlagen in Schubladen eingelegt werden können. Die Einlegeelemente können aber auch in einem Regal angeordnet werden. Die Einlegeelemente gibt es mit 8,10 und 16 Fächern und weisen dementsprechend verschiedene Abmessungen auf. Als zweites Produkt sind Kartonagen aufgeführt, in denen Waren, bspw. Schrauben und Muttern, bevorratet sein können. Die Kartonagen sind in sechs verschiedenen Größen vorhanden. Als drittes Produkt sind Kunststoffbehälter (ein Kleinladungsträger mit einem rechteckigen Boden mit vier Seitenwänden) aufgeführt, die in drei Abmessungen vorhanden. Als viertes Produkt sind Kleinladungsträger aufgeführt, bei denen eine Seitenwand klappbar ist. Diese Kleinladungsträger sind in drei Größen vorhanden.

Alle Waren des Warenwirtschaftssystems, die zur Bevorratung in Einlegeelementen, Kartonagen, Kunststoffbehältern und Kleinladungsträgern vorgesehen sind bzw. bei Neuaufnahmen von Waren vorgesehen werden, werden in einem der in Fig. 1 gezeigten Einlegeelementen. Kartonagen, Kunststoffbehältern und Kleinladungsträgern in das Warenwirtschaftssystem aufgenommen. Dadurch erfolgt eine Standardisierung der Produktabmessungen, die die Handhabung des Warenwirlschaftssystems und insbesondere eines Regals desselben vereinfacht.

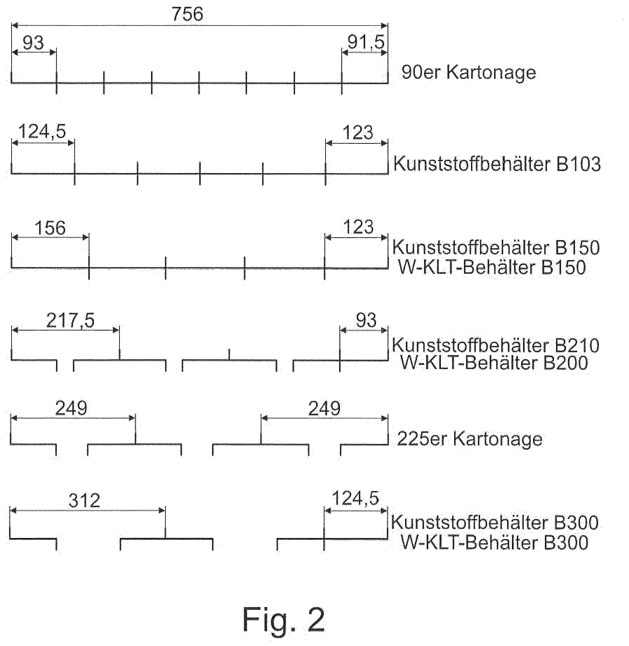

Figur 2 zeigt für eine für Produkte nutzbare Regalbreite eines Regals eines Warenwirtschafssystems von 756mm verschiedene Konstellationen von Produkten. In der ersten Reihe ist vorgesehen, Kartonagen mit 90er Breite anzuordnen. Die 90er Kartonagen weisen eine Breite (Außenmaß) von 93mm auf. Fängt man in Fig. 1 von links an, mit 90er Kartonagen nach rechts aufzufüllen, bleiben rechts 91,5mm als "Rest" über. Fängt man in der zweiten Reihe wieder von links an, Kunststoffbehälter mit der Breite 103 mit einer Außenbreite von 124,5mm aufzufüllen, bleibt ein Rest von 123mm über. Fängt man in der dritten Reihe wieder von links an, Kunststoffbehälter mit der Breite 150 mit einer Außenbreite von 156mm aufzufüllen, bleibt ein Rest von 123mm über. Fängt man in der vierten Reihe wieder von links an, Kunststoffbehälter mit der Breite 210 mit einer Außenbreite von 217,5mm aufzufüllen, bleibt ein Rest von 93mm über. Will man in der fünften Reihe Kartonagen mit der Breite 225 mit einer Außenbreite von 249mm rechts und links anordnen, bleibt in der Mitte ein Rest von 258m über. In der letzten Reihe sind zwei Kunststoffbehälter B300 mit der Außenbreite 312mm angeordnet, wodurch ein Rest von 124,5mm verbleibt.

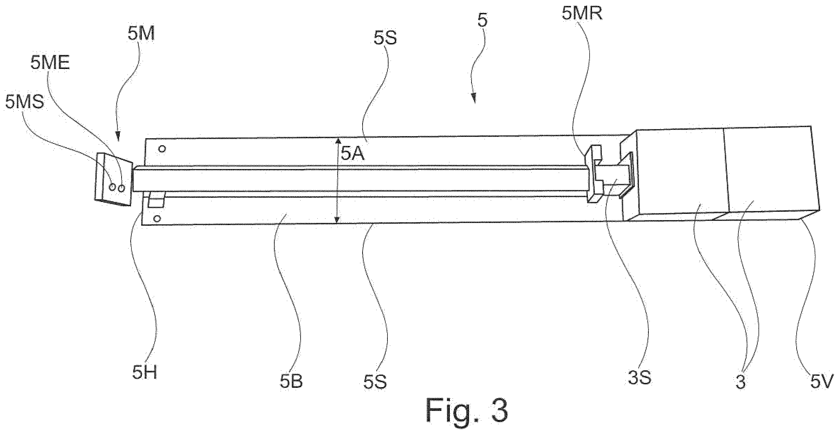

Fig. 3 zeigt eine perspektivische Ansicht eines Produktträgers 5 mit zwei Produkten 3, die auf dem Produktträger 5 angeordnet sind. Der Produktträger 5 weist einen Produktträgerboden 5B, eine Produktträgervorderseite 5V, eine Produktträgerhinterseite 5H sowie zwei Produktträgerseiten 5S auf, deren Abstand zueinander eine Aufnahmebreite 5A des Produktträgers definiert. Ein Produktschieber 3S auf dem Produktträger 5 schiebt die Produkte 3 in Richtung auf und gegen die Produktträgervorderseite 5V, so dass zwischen dem Produktschieber 3S und der Produktträgervorderseite 5V nur Produkte 5 angeordnet sind und diese ohne Abstand aneinander anliegen. Ist die Länge der Produkte in dieser Richtung (Produktschieber 3S - Produktträgervorseite 5V) bekannt, so kann man, wenn man den Abstand Produktschieber 3S - Produktträgervorseite 5V kennt, die Anzahl von Produkten auf dem Produktträger 5 bestimmen.

Um den Abstand Produktschieber 3S - Produktträgervorseite 5V zu messen, ist eine Messeinrichtung 5M auf dem Produktträger 5 vorgesehen. Die Messeinrichtung 5M umfasst einen Ultraschallsender und -empfänger 5MS, 5ME, die beide an der Produkthinterseite 5H des Produktträgers 5 angeordnet sind. Ferner umfasst sie einen Reflektor 5MR für die Ultraschallwellen des Ultraschallsenders 5MS, der an dem Produktschieber 3S angeordnet ist.

Von dem Ultraschallsender 5MS ausgesandte Ultraschallwellen werden an dem Reflektor 5MR reflektiert und auf den Empfänger 5ME zurückgeworfen. Die Messeinrichtung 5M kann auf Grund der sich ergebenden Laufzeit den Abstand zwischen dem Sender bzw. Empfänger 5MS, 5ME und dem Reflektor 5MR bestimmen. Da die Länge zwischen der Produktträgerhinterseite 5H und der Produktträgervorderseite 5V sowie die Länge des Produktschiebers 3S in dieser Richtung (zwischen Reflektor 3R und Anlagefläche des Produktschiebers 3 am Produkt 3) bekannt ist, kann die Länge zwischen der Anlagefläche des Produktschiebers 3S und der Produktvorderseite 5V berechnet werden. Da die Länge des Produkts in dieser Richtung ebenfalls bekannt ist, lässt sich die Anzahl von Produkten 3 auf dem Produktträger 5 bestimmen.

Die Messeinrichtung 5M des Produktträgers 5 ist über ein nicht dargestelltes elektrisches Kabel mit einem Datenlogger verbunden, der über weitere Kabel noch mit weiteren Produktträgern 5 verbunden ist. Der Datenlogger erhält von allen angeschlossenen Produktträgern 5 in festlegbaren Intervallen die jeweiligen Messergebnisse der Laufzeitmessung des Ultraschallsignals sowie eine Kennzeichnung des Produktträgers (vorliegend eine Kennzeichnung der Messeinrichtung 5M, die eine eigene Kennzeichnung bzw. Identifikation elektronisch mit den Laufzeilsignalen übermittelt). Diese Daten (welcher Produktträger 5 bzw. welche Messeinrichtung 5M welche Laufzeit gemessen hat) werden drahtlos (bspw. per WLAN) oder drahtgebunden an eine Zentrale des Warenwirtschaftssystems übermittelt. In dieser Zentrale erfolgt die oben skizzierte Berechnung des Bestands an Produkten 3 auf dem Produktträger 5. Unterschreitet der Bestand an Produkten eine vorbestimmte Grenze, wird dies einem Bestellverantwortlichen des Warenwirtschaftssystems, bspw. per Mail, mitgeteilt, woraufhin dieser eine Nachbestellung auslösen kann. Alternativ wird die Nachbestellung automatisch ausgelöst.

Jeder Produktträger 5 steht somit über Verbindungsmittel 7, vorliegend der Datcnlogger und Kabel, mit der Zentrale des Warenwirtschaftssystems in Verbindung, um den Bestand an Produkten auf dem Produktträger zu ermitteln und ggfls. Nachbestellungen auszulösen.

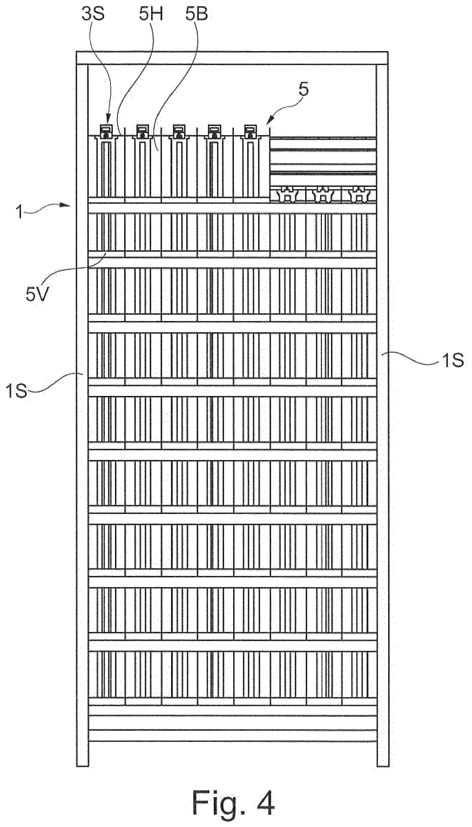

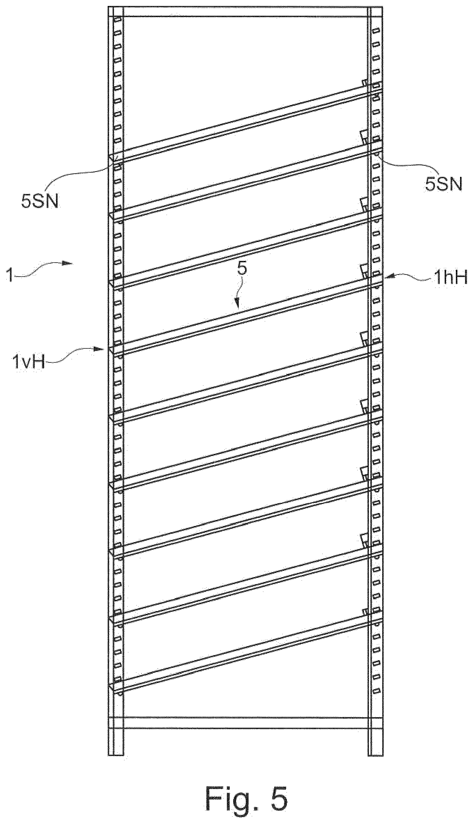

Ein erfindungsgemäßes Regal 1 ist in Fig. 4 in einer Frontansicht und in Fig. 5 in einer Seitenansicht gezeigt. Das Regal 1 umfasst zwei Seitenelemente 1S, vorliegend durch zwei metallische Regalstangen gebildet, sowie vordere und hintere Horizontalelemente 1vH, 1hH, die die Seitenelemente 1 S verbinden. Die Regalstangen weisen in ihrer Längserstreckung ein Lochraster auf, in das die Horizontalelemente 1vH, 1hH gesteckt sind, wobei die Horizontalelemente 1vH zwischen den beiden vorderen Regalstangen und die Horizontalelemente 1hH zwischen den beiden hinteren Regalstangen mit Höhenversatz zueinander angeordnet sind.

Die Horizontalelemente 1vH, 1hH weisen entlang ihrer Längserstreckung ein Lochraster auf und die Produktträger 5 weisen am Produktträgerboden 5B angeordnete Stecknasen 5SN auf, wodurch die Produktträger 5 in die Horizontalelemente 1vH, 1hH steckbar sind, s. Fig. 4 und 5. Durch den Höhenversatz zwischen den Horizontalelementen 1vH, 1hH ergibt sich die in Fig. 5 sichtbare schräge Anordnung der Produktträger 5, wodurch Produkte 3 auf dem Produktträger 5 durch die Gravitation und den Produktschieber 3S nach vorne bzw. unten geschoben werden.

Um nun ein Lagerplatz für eine Ware zu ändern, kann der Produktträger 5 dem Regal 1 entnommen werden und an einen anderen Platz in dem Regal 1 oder einem anderen Regal 1 gesteckt werden. Da die Messeinrichtung mit der zugehörigen Elektronik automatisch "mit umzieht" sind keine weiteren mechanischen Arbeiten notwendig. Wird in dem Warenwirtschaftssystem noch die Lage des Produktträgers 5 im Regal gepflegt, so ist lediglich dort noch der Umzug nachzuvollzichen.

Um einem Produktträger 5 ein bestimmtes Produkt zuzuordnen, wird wie folgt vorgegangen: Aus dem Produktträger 5 werden sämtliche Produkte 3 entnommen. Folgend wird der Produktschieber 3S in Richtung Produktträgerhinterseite 5H bis zu einem hinteren Anschlag geschoben und dort gehalten. Die Messeinrichtung 5M registriert, dass der Produktschieber 3S am Anschlag anliegt und übermittelt dies der Zentrale des Warenwirtschaftssystems, die so programmiert ist, dass dies als Neubelegung des Produktträgers 5 mit einem neuen Produkt 3 interpretiert.

An einer Bedieneinheit (bspw. einem Bildschirm an dem Regal 1 oder auf einer App auf einem Smartphone) kann ein Bediener des Regals 1 aus dem Warensortiment des Warenwirtschaftssystems nun die Ware in dem Produkt auswählen, die nun auf dem Produktträger 5 angeordnet werden soll. In der Zentrale des Warenwirtschaftssystems ist dann dem Produktträger 5 eine neue Ware in einem Produkt zugeordnet. Da in der Zentrale des Warenwirtschaftssystems die Abmessungen jeden Produkts hinterlegt sind, berechnet die Zentrale den Bestand an Produkten 3 auf dem Produktträger 5, sobald die Messeinrichtung 5M des Produktträgers 5 ihre Daten an die Zentrale liefert.

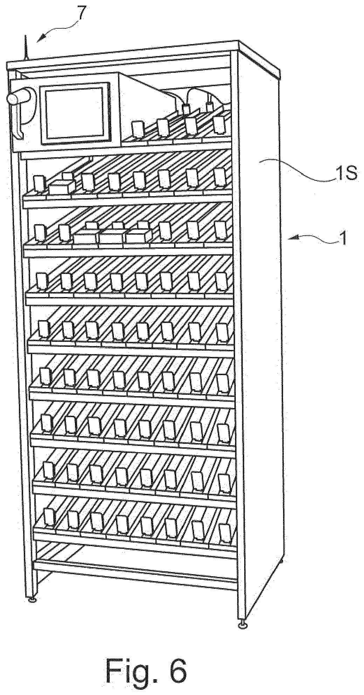

Fig. 6 zeigt eine perspektivische Ansicht einer weiteren Ausführungsform des erfindungsgemäßen Regals 1, das sich in folgenden Punkten von der zuvor beschriebenen Ausführungsform unterscheidet: Das Regal 1 weist auf einer Oberseite eine UMTS-Antenne zur Verbindung eines Datenloggers mit der Zentrale des Warenwirtschaftssystems auf. Die Seitcnelemente 1S sind als metallische Seitenwände gebildet. Oben links in dem Regal findet sich eine Bedieneinheit in Form eines druckempfindlichen Bildschirms, auf dem die Waren des Warenwirtschaftssystems sowie die Belegung des Regals 1 mit Produktträgern 5 angezeigt werden kann (welcher Produktträger an welcher Stelle des Regals). Auf dem Bildschirm kann für jeden Produktträger der IST- und SOLL-Zustand an Produkten angezeigt werden sowie die Grenze festgelegt werden, bei Erreichung derer eine Neubestellung ausgelöst wird. Ferner wird angezeigt, ob eine Neubestellung an Produkten für den Produktträger 5 ausgelöst wurde und wie viele Verpackungseinheiten bestellt wurden.

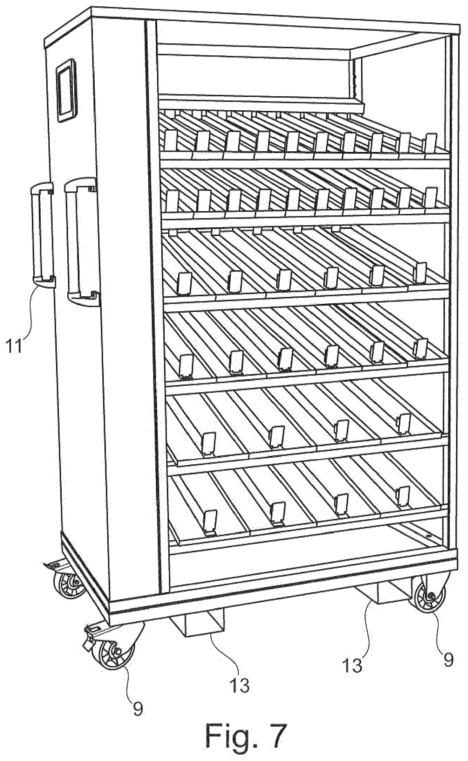

Fig. 7 zeigt eine perspektivische Ansicht einer weiteren Ausführungsform des erfindungsgemäßen Regals 1, das sich in folgenden Punkten von der zuvor beschriebenen Ausführungsform unterscheidet: Das Regal 1 weist Rollen 9 am Regalboden auf und ist dadurch mit Hilfe von Handgriffen 11 verschiebbar. Der druckempfindliche Bildschirm als Bedieneinheit ist in einer Seitenwand des Regals 1 angeordnet. In dem Regal 1 ist eine Batterie zur Versorgung der Verbindungsmittel 7 mit elektrischer Energie vorgesehen. Das Regal 1 weist Aufnahmetaschen 13 zur Aufnahme von Gabeln eines Gabelstaplers auf, um das Regal 1 mit einem Gabelstapler zu versetzen.

In einer weiteren Ausführungsform ist mindestens ein Produktträger 5 oder ein Regalfach bzw. Einlegeboden mit mindestens einem Produktträger 5 oder ein erfindungsgemäßes Regal 1 in einem Gefahrstoffschrank, insbesondere einem explosionsgeschützten Gefahrstoffschrank, angeordnet. In einem insbesondere explosionsgeschützten Gefahrstoffschrank ist somit insbesondere ein Produktträger 5 angeordnet, um in diesem angeordnete Produkte 3 des Warenwirtschaftssystems zu verwalten.

### Bezugszeichenliste

- 1: Regal eines Warenwirtschaftssystems
- 1hH: hinteres Horizontalelement
- 1vH: vorderes Horizontalelement
- 1S: Seitenelement
- 3: Produkt
- 3S: Produktschieber
- 5: Produktträger
- 5A: Aufnahmebreite des Produktträgers
- 5B: Produktträgerboden
- 5H: Produktträgerhinterseite
- 5M: Messeinrichtung des Produktträgers
- 5ME: Empfänger der Messeinrichtung
- 5MR: Reflektor der Messeinrichtung auf Produktschieber 3S
- 5MS: Sender der Messeinrichtung
- 5S: Produktträgerseite
- 5SN: Stecknase
- 5V: Produktträgervorderseite
- 7: Verbindungsmittel
- 9: Rollen
- 11: Handgriff
- 13: Aufnahmetasche

## Patentansprüche

1. Regal (1) eines Warenwirtschaftssystems zur Bereitstellung von Produkten (3) mit
a. zwei Seitenelementen (1S),
b. mindestens einem vorderen und einem hinteren Horizontalelement (1vH. 1hH),
i. wobei diese die beiden Seitenelemente (1S) verbinden,
c. mindestens einem Produktträger (5) zur Aufnahme von gleichen Produkten (3),
i. der in das vordere und das hintere Horizontalelement gesteckt ist und
ii. eine eindeutige Kennzeichnung aufweist,
d. einer Messeinrichtung (5M) für mindestens einen Produktträger (5),
i. die den Füllstand des Produktträgers (5) mit Produkten (3) misst,
e. einem Verbindungsmittel (7), mit dem Daten der Messeinrichtung (5M) betreffend den Füllstand des Produktträgers (5) mit Produkten (3) und die Kennzeichnung des Produktträgers (5) an eine Zentrale eines Warenwirtschaftssystems übermittelbar sind, um Nachbestellungen von Produkten (3) für einen Produktträger (5) auszulösen.

2. Regal nach Anspruch 1, **dadurch gekennzeichnet, dass** ein Seitenelement (1S) eine Seitenwand oder mindestens zwei Regalstangen sind, jeweils insbesondere aus Metall.

3. Regal nach Anspruch 1 oder 2, **dadurch gekennzeichnet, dass** das Horizontalelement (1H) eine Strebe, insbesondere eine Metallstrebe, ist, die bevorzugt ein Lochraster aufweist.

4. Regal nach einem der vorangehenden Ansprüche, **dadurch gekennzeichnet, dass** eine vorbestimmte Anzahl von Produktträgern (5) mit unterschiedlicher Aufnahmebreite (5A) dem Regal zugeordnet ist, wobei jedes einer Produkte (3) eines Warensortiments des Warenwirtschaftssystems eine Abmessung aufweist, die einer Aufnahmebreite (5A) eines Produktträgers (5) entspricht.

5. Regal nach einem der vorangehenden Ansprüche, **dadurch gekennzeichnet, dass** ein Produktträger (5) einen Produktträgerboden (5B), zwei Produktträgerseiten (5S), eine Produktträgervorderseite (5V) und eine Produktträgerhinterseite (5H) aufweist sowie vorteilhaft am Produktträgerboden (5B) angeordnete, den Produktträgerseiten (5S) gegenüberliegende Stecknasen (5SN), die in ein Lochraster der Horizontalelemente (1H) steckbar sind.

6. Regal nach einem der vorangehenden Ansprüche, **dadurch gekennzeichnet, dass** der Produktträger (5) einen insbesondere federbelasteten Produktschieber (3S) umfasst, der auf dem Produktträger (5) angeordnete gleiche Produkte (3) in Richtung der Produktträgervorderseite (5V) drückt.

7. Regal nach Anspruch 5 oder 6, **dadurch gekennzeichnet, dass** eine Aufnahmebreite (5A) des Produktträgers (5) durch den Abstand der Produktträgerseiten (5S) gebildet ist.

8. Regal nach einem der vorangehenden Ansprüche, **dadurch gekennzeichnet, dass** ein Verhältnis zwischen einer Anzahl von unterschiedlichen Waren des Warenwirtschaftssystems zu einer Anzahl von unterschiedlichen Produktträgern (5) des Regals wie mind, 100:1, bevorzugt mind. wie 1000: 1 ist und weiter bevorzugt mind. wie 10000: 1 ist.

9. Regal nach einem der vorangehenden Ansprüche, **dadurch gekennzeichnet, dass** ein Produkt (3) eine Kartonage, eine Aerosoldose, ein Kanister, ein Kleinladungsträger mit oder ohne Entnahmeklappe oder ein Einlegeelement, bspw. für eine Schublade, ist.

10. Regal nach einem der vorangehenden Ansprüche, **dadurch gekennzeichnet, dass** die Meßeinrichtung (5M) einen Ultraschallsender und -empfänger oder eine Linearmesseinrichtung umfasst, um eine Länge zwischen der Produktträgervorderseite (5V) des Produktträgers und einem Produktschieber (3S) zu bestimmen, zwischen denen die gleichen Produkte angeordnet sind, um die Anzahl von Produkten zwischen diesen bzw, auf dem Produktträger zu bestimmen.

11. Regal nach einem der vorangehenden Ansprüche, **dadurch gekennzeichnet, dass** die Kennzeichnung des Produktträgers (5) ein Kennzeichnungselement auf dem Produktträger (5) umfasst, bspw. ein Barcode oder ein QR-Code, und/oder ein Kennzeichnungselement in der Messeinrichtung (5M) umfasst, bspw. eine MAC-Adresse, ein Barcode oder ein QR-Code.

12. Regal nach einem der vorangehenden Ansprüche, **dadurch gekennzeichnet, dass** das Verbindungsmittel (7) einen Datenlogger und ein Übertragungsmittel, bspw. eine drahtgebundene oder drahtlose Verbindungsleitung, zu einem Warenwirtschaftssystem umfasst, so dass die Daten der Messeinrichtungen (5M) von dem Datenlogger gesammelt und mittels dem Übertragungsmittel an eine Zentrale des Warenwirtschaftssystems übertragbar sind.

13. Wärenwirtschaftssystem mit einem Regal (1) nach einem der vorangehenden Ansprüche.
